# EUROPÄISCHE PATENTANMELDUNG

(11) **EP 0 823 296 A2**
(43) Veröffentlichungstag der Anmeldung: **11.02.1998**
(21) Anmeldenummer: 97112805.3
(22) Anmeldetag: 25.07.1997
(51) Int. Cl.: B21C 37/22, B21D 39/03, B21D 53/02, F16B 11/00, F28F 1/10, F28F 1/20, F28F 9/26

(54) **Verfahren zur Herstellung von korrosionsbeständigen Wärme-übertragern**

(30) Priorität: 03.08.1996 EP 96112577; 03.08.1996 EP 96112578
(71) Anmelder: Balcke-Dürr GmbH, 40882 Ratingen (DE)
(72) Erfinder: Podhorsky, Miroslav, Dr.-Ing., 49882 Ratingen (DE); Schrey, Hans Georg, Dipl.-Ing., 40878 Ratingen (DE); Holten, Wolfgang, Dipl.-Ing., 40629 Düsseldorf (DE); Hubregtse, Huub C.M., Dipl.-Ing., 4301 PC Zierikzee (NL)
(74) Vertreter: Stenger, Watzke & Ring Patentanwälte

(57) **Zusammenfassung**

Die Erfindung betrifft ein Verfahren zur Herstellung von korrosionsbeständigen Wärmeübertragern unter Verwendung von Rohren (1), die zumindest auf einem Teil ihrer Oberfläche mit die Wärmeübertragungsfläche vergrößernden Rippen (2) versehen sind. Um ein wirtschaftliches großtechnisches Verfahren dieser Art zu schaffen und die bei der bisherigen Verschweißung auftretenden Nachteile zu vermeiden, werden die Rippen (2) zumindest auf einem Teilbereich ihrer Berührungsfläche mit der Mantelfläche der Rohre (1) durch Kleben oder Weichlöten verbunden.

## Beschreibung

Die Erfindung betrifft ein Verfahren zur Herstellung von korrosionsbeständigen Wärmeübertragern unter Verwendung von Rohren, die zumindest auf einem Teil ihrer Oberfläche mit die Wärmeübertragungsfläche vergrößernden Rippen versehen sind.

Aus der DE 43 22 405 C2 sind rohrförmige Elemente für Wärmeübertrager sowie ein Verfahren zu ihrer Herstellung bekannt, wobei die Rohre und die zumindest auf einem Teil ihrer Oberfläche befestigten Rippen aus Stahl bestehen und miteinander durch ein Kondensator-Entladungs-Schweißverfahren verschweißt werden. Wegen der spezifischen Eigenschaften von Leichtmetall, vorzugsweise Aluminium, insbesondere infolge der schnellen Bildung von Oxidschichten ist das aus der DE 43 22 405 C2 bekannte Verfahren nicht anwendbar, wenn die Rohre und/oder Rippen der Wärmeübertragungselemente aus Leichtmetall oder aus mit Leichtmetall beschichteten oder plattierten Werkstoffen bestehen. Auch für mit einer Korrosionsschutzschicht versehener Rohre ist das bekannte Verfahren nicht anwendbar, da durch den Schweißvorgang die Korrosionsschutzschicht zerstört wird.

Um derartige, aus Leichtmetall bestehende oder mit einer Beschichtung versehene Wärmeübertragungselemente herstellen zu können, wird mit der EP 0 417 894 A2 ein Herstellungsverfahren vorgeschlagen, bei dem aluminiumbeschichtete Stahlrohre mit Rippen aus Aluminium miteinander dadurch hartverlötet werden, daß sie für eine bestimmte Zeitspanne einer Temperaturerhöhung ausgesetzt werden, welche ein zumindest teilweises Schmelzen und damit Ineinanderverlaufen der Aluminiumschichten bewirkt, ohne das Entstehen eines Eisen-Aluminium-Verbundes hervorzurufen. Da die Randbedingungen des aus der EP 0 417 894 A2 bekannten Lötverfahrens zur Erzielung einer festen Verbindung zwischen Rippe und Rohr sehr exakt eingehalten werden müssen, ist dieses bekannte Verfahren sehr aufwendig und für eine wirtschaftliche großtechnische Anwendung nicht geeignet.

Der Erfindung liegt die **Aufgabe** zugrunde, ein Verfahren der eingangs beschriebenen Art zur großtechnischen Herstellung von korrosionsbeständigen Wärmeübertragern unter Verwendung von zumindest auf einem Teil ihrer Oberfläche mit die Wärmeübertragungsfläche vergrößernden Rippen versehenen Rohren zu schaffen, das für eine wirtschaftliche großtechnische Anwendung geeignet ist und die Nachteile der Verschweißung vermeidet.

Die **Lösung** dieser Aufgabenstellung durch die Erfindung ist dadurch gekennzeichnet, daß die Rippen zumindest auf einem Teilbereich ihrer Berührungsfläche mit der Mantelfläche der Rohre durch Kleben oder Weichlöten verbunden werden.

Durch die erfindungsgemäße Verbindung der Rippen mit den Rohren durch Kleben oder Weichlöten werden Beschädigungen der Oberflächen der Rippen und Rohre, insbesondere Zerstörungen von Korrosionsschutzschichten vermieden, da ein örtlich sehr hoher Wärmeeintrag bei der Herstellung der Verbindung unterbleibt. Außerdem erfordert weder das Kleben noch das Weichlöten die exakte Einhaltung vorgegebener Temperaturen und Einwirkzeiten, so daß das erfindungsgemäße Verfahren in wirtschaftlicher Weise auch großtechnisch angewendet werden kann.

Bei einer bevorzugten Ausführung der Erfindung werden die Rippen durch ein gewelltes oder gefaltetes Band gebildet, das im Bereich seiner Wellentäler mit der Oberfläche des Rohres verbunden wird. Vorzugsweise verlaufen die Wellen oder Falten des Rippenbandes etwa rechtwinklig zur Längsachse des Rohres, so daß das Band in Achsrichtung des Rohres aufgebracht werden kann. Selbstverständlich ist aber auch eine Anordnung der Wellen oder Falten parallel zur Rohrlängsachse möglich.

Die Rohre und/oder Rippen sind gemäß einem weiteren Merkmal der Erfindung mit einer Korrosionsschutzschicht versehen, die aus einem Schutzlack, aus einer Kunststoffbeschichtung, aus einem Leichtmetall oder einer Leichtmetallegierung oder aus einem Schwermetall oder einer Schwermetallegierung, insbesondere Zink oder Zinklegierung bestehen kann.

Bei einer bevorzugten Ausführungsform der Erfindung werden die Rohre aus Leichtmetall, insbesondere Aluminium, aus einer Leichtmetallegierung oder aus einem mit Leichtmetall beschichteten oder plattierten Werkstoff, insbesondere Stahl hergestellt. Die Rohre und Rippen können alternativ auch aus verzinktem Stahl hergestellt sein. Schließlich ist es erfindungsgemäß möglich, die Rippen aus Leichtmetall, insbesondere Aluminium oder aus einer Leichtmetallegierung herzustellen. Schließlich ist es möglich, die Rippen aus einer Legierung aus Zink und Aluminium, vorzugsweise mit einem Anteil von etwa 95 % Zink und 5 % Aluminium herzustellen.

Mit der Erfindung wird weiterhin vorgeschlagen, die Rippen und Rohre auf einem Teil ihrer Berührungsfläche zusätzlich durch Durchsetzfügen miteinander zu verbinden. Bei einem derartigen Durchsetzfügen werden bestimmte Teile der Rippen und des Rohres vor oder während des Klebens oder Weichlötens gemeinsam verformt, so daß sich zusätzlich zu den verklebten oder weichverlöteten Teilbereichen örtlich formschlüssige Verbindungen in den Berührungsflächen zwischen den Rippen und Rohren ergeben.

Im Bereich der Berührungsfläche zwischen den Rippen und den Rohren können gemäß einem weiteren Merkmal der Erfindung einen unmittelbaren metallischen Kontakt herstellende Erhebungen an den Rippen und/oder Rohren ausgebildet werden, so daß die insbesondere beim Kleben gegebenenfalls auftretende Isolierschicht durch Flächen mit gutem Wärmeübergang unterbrochen wird. Erfindungsgemäß bilden derartige Erhebungen insbesondere im Bereich der miteinander verklebten oder weichgelöteten Flächenbereiche wärmeleitende Berührungsflächen.

Schließlich betrifft die Erfindung einen Wärmeübertrager mit nach dem erfindungsgemäßen Verfahren hergestellten Rohren.

Auf der Zeichnung sind zwei Ausführungsbeispiele eines nach dem erfindungsgemäßen Verfahren hergestellten Rippenrohres dargestellt, und zwar zeigen:
- Fig. 1: einen Längsschnitt durch ein Rippenrohr mit auf einer Flachseite des Rohres angebrachten Rippen,
- Fig. 2: einen Querschnitt durch das Rippenrohr gemäß der Schnittlinie II-II in Fig. 1,
- Fig. 3: eine vergrößerte Schnittdarstellung des in Fig. 2 eingekreisten Bereiches III,
- Fig. 4: eine schematische Darstellung des Durchsetzfügens anhand einer Schnittdarstellung im Ausgangszustand,
- Fig. 5: eine der Fig. 4 entsprechende Darstellung nach Beendigen des Durchsetzfügens und
- Fig. 6: den Endzustand der Fügestelle in einem Schnitt entsprechend den Figuren 4 und 5.

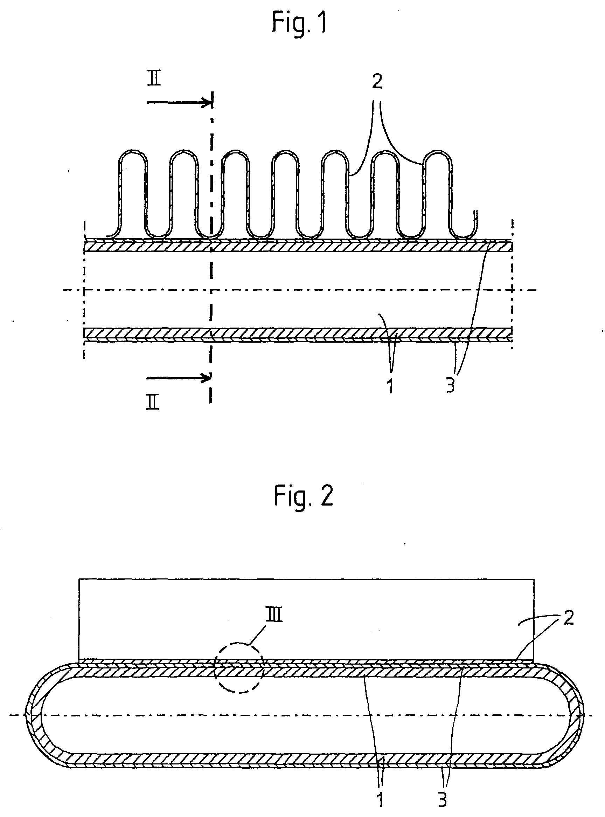

Die Figuren 1 und 2 zeigen schematisch ein Ausführungsbeispiel eines zur Herstellung von korrosionsbeständigen Wärmeübertragern einzusetzenden flachen Rohres 1, das auf der Oberfläche einer seiner Flachseiten mit die Wärmeübertragungsfläche vergrößernden Rippen 2 versehen ist. Beim Ausführungsbeispiel werden diese Rippen 2 durch ein gewelltes Band gebildet, dessen Wellen rechtwinklig zur Rohrlängsachse verlaufen und an der Berührungsfläche zwischen dem Fußbereich der Rippen 2 und der Mantelfläche des Rohres 1 mit dem Rohr 1 durch Kleben oder Weichlöten verbunden sind.

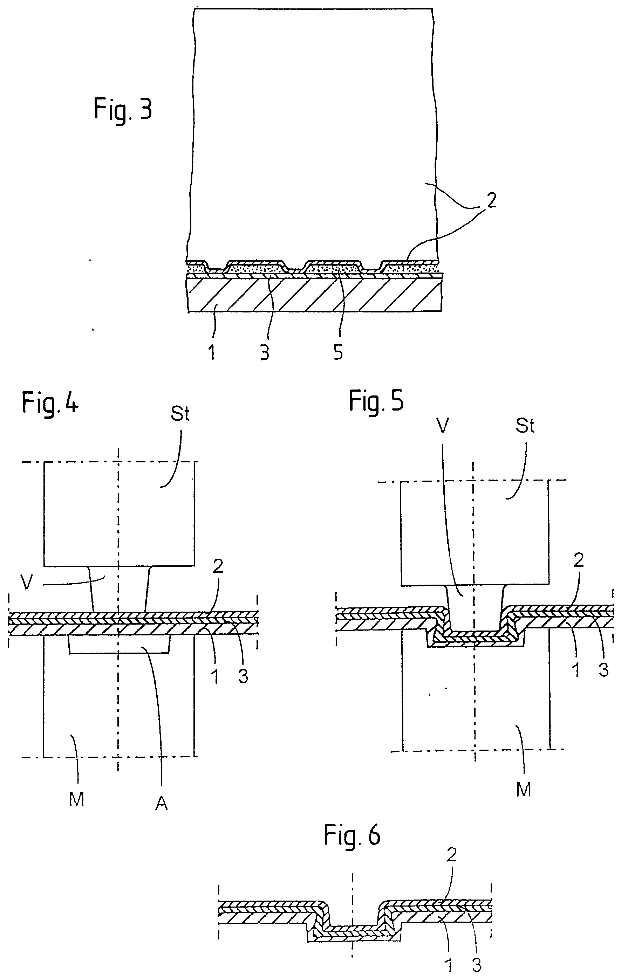

Wie aus der vergrößerten Schnittdarstellung des in Fig. 2 eingekreisten Bereiches III in Fig. 3 hervorgeht, besteht beim dargestellten Ausführungsbeispiel das Rohr 1 aus Stahl; es ist auf seiner Mantelfläche mit einer Korrosionsschutzschicht 3 versehen. Diese Korrosionsschutzschicht kann aus einem Schutzlack, einer Kunststoffbeschichtung, aus einem Leichtmetall oder einer Leichtmetallegierung oder aus einem Schwermetall oder einer Schwermetallegierung, insbesondere Zink oder einer Zinklegierung bestehen. Die Rippen 2 bestehen vorzugsweise aus Leichtmetall, insbesondere Aluminium oder aus einer Leichtmetallegierung. Sie können auch aus einer Legierung aus Zink und Aluminium, vorzugsweise mit einem Anteil von etwa 95 % Zink und 5 % Aluminium hergestellt werden.

Selbstverständlich ist es auch möglich, die Rohre 1 und Rippen 2 aus verzinktem Stahl herzustellen, insbesondere wenn diese miteinander durch Weichlöten verbunden werden.

Wie aus der vergrößerten Darstellung in Fig. 3 hervorgeht, sind im Bereich der Berührungsfläche zwischen den Rippen 2 und den Rohren 1 Erhebungen 4 ausgebildet, die die in dieser Vergrößerung erkennbare Klebstoffschicht 5, die der Verbindung der Rippe 2 mit dem Rohr 1 dient, durchdringen, um einen unmittelbaren metallischen Kontakt zwischen Rippe 2 und Rohr 1 herzustellen, so daß im Bereich der verklebten Flächenbereiche wärmeleitende Berührungsflächen gebildet werden.

Um die Verbindung zwischen dem mit einer Korrosionsschutzschicht 3 versehenen Rohr 1 und den Rippen 2 zu verbessern, können gemäß dem in den Figuren 4 bis 6 dargestellten zweiten Ausführungsbeispiel mindestens einige Teilbereiche der Berührungsflächen zwischen den Rippen 2 und dem Rohr 1 durch Durchsetzfügen miteinander formschlüssig verbunden werden. Ein derartiger Durchsetzfügevorgang ist in den Schnittdarstellungen der Figuren 4, 5 und 6 schematisch dargestellt.

Die Fig. 4 zeigt einen Schnitt durch ein mit einer Korrosionsschutzschicht 3 versehenes Rohr 1 sowie durch eine Rippe 2 im Bereich einer Berührungsfläche zwischen diesen Teilen. Die Unterseite des Rohres 1 liegt gemäß Fig. 4 auf einer Matrize M, die mit einer Aussparung A versehen ist. Im Bereich dieser Aussparung A greift der Vorsprung V eines Stempels St an. Die Querschnittsabmessungen des Stempels St sind hierbei geringer als die der Aussparung A in der Matrize M.

Wenn nunmehr gemäß Fig. 5 der Stempel St mit seinem Vorsprung V in die Aussparung A der Matrize M gedrückt wird, verformt sich sowohl das Material des Rohres 1 und seiner Korrosionsschutzschicht 3 als auch der Rippe 2, so daß sich die in Fig. 5 dargestellte formschlüssige Verbindung zwischen dem mit der Korrosionsschutzschicht 3 versehenen Rohr 1 und der Rippe 2 ergibt.

Die nach Entfernen des aus Matrize M und Stempel St bestehenden Werkzeuges in Fig. 6 im Schnitt dargestellte Fügestelle zeigt, daß sich die Materialien von Rohr 1, Korrosionsschutzschicht 3 und Rippe 2 aufgrund des beim Durchsetzfügen eintretenden Fließens formschlüssig ineinander verkeilt haben, so daß das beschriebene Durchsetzfügen eine zuverlässige Verbindung zwischen Rippe 2 und Rohr 1 schafft. Selbstverständlich kann auch im Bereich mindestens einiger dieser Fügestellen zusätzlich zum hierdurch erzielten Formschluß eine Verklebung oder Weichverlötung stattfinden.

### Bezugszeichenliste

- 1: Rohr
- 2: Rippe
- 3: Korrosionsschutzschicht
- 4: Erhebung
- 5: Klebstoffschicht
- A: Aussparung
- M: Matrize
- St: Stempel
- V: Vorsprung

## Patentansprüche

1. Verfahren zur Herstellung von korrosionsbeständigen Wärmeübertragern unter Verwendung von Rohren (1), die zumindest auf einem Teil ihrer Oberfläche mit die Wärmeübertragungsfläche vergrößernden Rippen (2) versehen sind,
**dadurch gekennzeichnet,**
daß die Rippen (2) zumindest auf einem Teilbereich ihrer Berührungsfläche mit der Mantelfläche der Rohre (1) durch Kleben oder Weichlöten verbunden werden.

2. Verfahren nach Anspruch 1, dadurch gekennzeichnet, daß die Rippen (2) durch ein gewelltes oder gefaltetes Band gebildet werden, das im Bereich seiner Wellentäler mit der Oberfläche des Rohres (1) verbunden wird.

3. Verfahren nach Anspruch 1 und 2, dadurch gekennzeichnet, daß die Wellen bzw. Falten des Rippenbandes etwa rechtwinklig zur Längsachse des Rohres (1) verlaufen.

4. Verfahren nach einem der Ansprüche 1 bis 3, dadurch gekennzeichnet, daß die Rohre (1) und/oder Rippen (2) mit einer Korrosionsschutzschicht (3) versehen sind.

5. Verfahren nach Anspruch 4, dadurch gekennzeichnet, daß die Korrosionsschutzschicht (3) aus einem Schutzlack besteht.

6. Verfahren nach Anspruch 4, dadurch gekennzeichnet, daß die Korrosionsschutzschicht (3) aus einer Kunststoffbeschichtung besteht.

7. Verfahren nach Anspruch 4, dadurch gekennzeichnet, daß die Korrosionsschutzschicht (3) aus einem Leichtmetall oder einer Leichtmetallegierung besteht.

8. Verfahren nach Anspruch 4, dadurch gekennzeichnet, daß die Korrosionsschutzschicht (3) aus einem Schwermetall oder einer Schwermetallegierung, insbesondere Zink oder Zinklegierung besteht.

9. Verfahren nach Anspruch 1, dadurch gekennzeichnet, daß die Rohre (1) aus Leichtmetall, insbesondere Aluminium, aus einer Leichtmetallegierung oder aus einem mit Leichtmetall beschichteten oder plattierten Werkstoff, insbesondere Stahl hergestellt sind.

10. Verfahren nach Anspruch 1, dadurch gekennzeichnet, daß die Rohre (1) und Rippen (2) aus verzinktem Stahl hergestellt sind.

11. Verfahren nach Anspruch 1 und 9, dadurch gekennzeichnet, daß die Rippen (2) aus Leichtmetall, insbesondere Aluminium oder aus einer Leichtmetallegierung hergestellt sind.

12. Verfahren nach Anspruch 1, dadurch gekennzeichnet, daß die Rippen aus einer Legierung aus Zink und Aluminium, vorzugsweise mit einem Anteil von etwa 95 % Zink und 5 % Aluminium hergestellt sind.

13. Verfahren nach mindestens einem der Ansprüche 1 bis 12, dadurch gekennzeichnet, daß die Rippen (2) und Rohre (1) auf einem Teil ihrer Berührungsfläche zusätzlich durch Durchsetzfügen miteinander verbunden werden.

14. Verfahren nach mindestens einem der Ansprüche 1 bis 12, dadurch gekennzeichnet, daß im Bereich der Berührungsfläche zwischen den Rippen (2) und den Rohren (1) einen unmittelbaren metallischen Kontakt herstellende Erhebung (4) an den Rippen (2) und/oder Rohren (1) ausgebildet sind.

15. Verfahren nach Anspruch 14, dadurch gekennzeichnet, daß derartige Erhebungen (4) insbesondere im Bereich der miteinander verklebten oder weichgelöteten Flächenbereiche wärmeleitende Berührungsflächen bilden.

16. Wärmeübertrager mit nach dem Verfahren nach mindestens einem der Ansprüche 1 bis 15 hergestellten Rohren.
